# FASCICULE DE BREVET EUROPEEN

(11) **EP 3 894 490 B1**
(45) Date de publication et mention de la délivrance du brevet: **07.06.2023**
(21) Numéro de dépôt: 19812800.1
(22) Date de dépôt: 04.12.2019
(51) Int. Cl.: C09D 11/322, C09D 11/38, C09D 11/033, C09D 11/037, C09D 11/52

(54) **ENCRE A BASE DE NANOPARTICULES D'ARGENT**
TINTE AUF BASIS VON SILBERNANOPARTIKELN
INK BASED ON SILVER NANOPARTICLES

(30) Priorité: 13.12.2018 FR 1872892
(43) Date de publication de la demande: 20.10.2021
(73) Titulaire: Genes'Ink SA, 13790 Rousset (FR)
(72) Inventeur: LIMAGE, Stephanie, 13720 La Bouilladisse (FR); VERSINI, Corinne, 13100 Aix en Provence (FR); KAUFFMANN, Louis-Dominique, 13100 Aix en Provence (FR); FADDOUL, Rita, 13530 Trets (FR)
(74) Mandataire: De Kezel, Eric
(86) Numéro de dépôt international: PCT/EP2019/083643
(87) Numéro de publication internationale: WO 2020/120252

(56) Documents cités:
- WO-A1-2015/000796
- WO-A1-2016/184979
- FR-A1- 3 013 607
- US-A1- 2012 097 059

## Description

La présente invention a pour objet des formulations d'encre à base de nanoparticules d'argent. En particulier, la présente invention concerne des formulations d'encre à base de nanoparticules d'argent, les dites encres étant stables, à conductivité améliorée et particulièrement adaptée à la technologie d'impression sans contact de type jet d'encre

Des encres similaires ont déjà été décrites par la Demanderesse dans sa demande de brevet WO2016184979 (A1) publiée le 24 novembre 2016. ajouter la page "1 a" ici

Plus particulièrement, la présente invention concerne des formulations d'encre à base de nanoparticules d'argent, les dites encres étant caractérisées par un ensemble de propriétés améliorées parmi lesquelles nous citerons à titre illustratif :
- Une stabilité supérieure, et/ou
- Une tension de surface améliorée, et/ou
- Un meilleur recuit (homogénéité du dépôt), et/ou
- Une absence de génération de bulles/mousses lors de l'impression, et/ou
- Une excellente conductivité après séchage à température ambiante.

Plus particulièrement, la présente invention se rapporte au domaine des encres à base de nanoparticules conductrices adaptées à la fois à la technologie d'impression sans contact de type jet d'encre ainsi qu'au slot die, spray, l'enduction (« blade coating »), la tampographie, la flexographie et/ou la gravure.

Les encres à base de nanoparticules conductrices selon la présente invention peuvent être imprimées sur tous types de supports. On citera à titre d'exemple les supports suivants : polymères et dérivés de polymères, matériaux composites, matériaux organiques, et/ou matériaux inorganiques ; en particulier le papier.

Les encres à base de nanoparticules conductrices selon la présente invention présentent de nombreux avantages parmi lesquels nous citerons à titre d'exemples non limitatifs :
FR3013607A1 a pour objet des formulations de dispersions de nanoparticules d'argent et d'encres à base des dites dispersions. En particulier, FR3013607A1 revendique une dispersion à base de nanoparticules d'argent dont la composition comprend au moins : un composé « a » consistant en des nanoparticules d'argent, un composé « b » consistant en un solvant cyclooctane et/ou un solvant de type ester méthylique d'acides gras et/ou un solvant terpénique et/ou un mélange de deux ou plusieurs des dits solvants, un composé « c » consistant en un agent dispersant, et un composé « d » consistant en un agent dispersant différent du composé « c » ; FR3013607A1 revendique aussi une encre à base de nanoparticules d'argent comprenant la dite dispersion, un composé « e » consistant en un solvant différent du composé « b » utilisé, et un composé « f » optionnel consistant en un agent modificateur de rhéologie.

US2012097059A1 revendique une composition d'encre comprenant : une pluralité de nanostructures métalliques, un ou plusieurs modificateurs de viscosité ; et un support liquide aqueux comprenant de l'eau et un ou plusieurs co-solvants miscibles à l'eau, dans lequel l'eau représente environ 40 à 60 % en poids du support liquide aqueux.

WO2015000796A1 revendique une composition d'encre comprenant un composé « a » consistant en des nanoparticules, un composé « b » consistant en un solvant alcool sélectionné parmi les alcools monohydriques aliphatiques ou leurs mélanges, un composé « c » consistant en un co-solvant alcool différent du composé « b » et sélectionné parmi les alcools monohydriques insaturés ou leurs mélanges, un composé « d » consistant en un dispersant, et un composé « e » optionnel consistant en un épaississant ou stabilisant.
- une stabilité dans le temps supérieure aux encres actuelles ;
- une tension de surface améliorée ;
- une non-toxicité des solvants et des nanoparticules ;
- une conservation des propriétés intrinsèques des nanoparticules ; et, en particulier,
- une conductivité améliorée pour des températures de recuit généralement comprises entre 120°C et 300°C ; et/ou
- une excellente conductivité après séchage à température ambiante.

La présente invention se rapporte également à une méthode de préparation améliorée des dites encres ; enfin, la présente invention se rapporte aussi à l'utilisation des dites encres dans le domaine de l'impression sans contact de type jet d'encre, du slot die, spray, l'enduction (« blade coating »), la tampographie, la flexographie et/ou de la gravure.

A la vue de la littérature de ces dernières années, les nanocristaux colloïdaux conducteurs ont reçu beaucoup d'attention grâce à leurs nouvelles propriétés optoélectroniques, photovoltaïques et catalytiques. Cela les rend particulièrement intéressants pour de futures applications dans le domaine de la nanoélectronique, des cellules solaires, des capteurs et du biomédical.

Le développement de nanoparticules conductrices permet de recourir à de nouvelles mises en oeuvre et d'entrevoir une multitude de nouvelles applications. Les nanoparticules possèdent un rapport surface / volume très important et la substitution de leur surface par des tensioactifs entraîne le changement de certaines propriétés, notamment optiques, et la possibilité de les disperser.

Leurs faibles dimensions peuvent amener dans certains cas des effets de confinement quantique. Le terme de nanoparticules est employé lorsqu'au moins une des dimensions de la particule est inférieure ou égale à 250 nm. Les nanoparticules peuvent être des billes (de 1 à 250 nm), des bâtonnets (L < 200 à 300 nm), des fils (quelques centaines de nanomètres voire quelques microns), des disques, des étoiles, des pyramides, des tétrapodes, des cubes ou des cristaux lorsqu'ils n'ont pas de forme prédéfinie.

Plusieurs procédés ont été élaborés afin de synthétiser des nanoparticules conductrices. Parmi eux, on peut citer de façon non exhaustive :
- les procédés physiques : la déposition de vapeur chimique (aussi connue sous la dénomination « Chemical Vapor Déposition - CVD ») lorsqu'un substrat est exposé à des précurseurs chimiques volatilisés qui réagissent ou se décomposent sur sa surface. Ce procédé conduit généralement à la formation de nanoparticules dont la morphologie dépend des conditions utilisées ; l'évaporation thermique ; l'épitaxie par jets moléculaires (aussi connue sous la dénomination « Molecular Beam Epitaxy ») lorsque des atomes qui vont constituer les nanoparticules sont bombardés à grande vitesse sur le substrat (où ils vont se fixer), sous la forme d'un flux gazeux ;
- les procédés chimiques ou physico-chimiques : la microémulsion ; l'impulsion laser en solution, lorsqu'une solution contenant un précurseur est irradiée par faisceau laser. Les nanoparticules se forment dans la solution le long du faisceau lumineux ; La synthèse par irradiation aux microondes ; La synthèse orientée assistée par des surfactants ; La synthèse sous ultrasons ; La synthèse électrochimique ; La synthèse organométallique ; La synthèse en milieu alcoolique.

Les synthèses physiques consomment plus de matières premières avec des pertes significatives. Elles nécessitent généralement du temps et des températures élevées ce qui les rendent peu attractives pour le passage à une production à l'échelle industrielle. Cela les rend non adaptées à certains substrats, par exemple les substrats souples. De plus, les synthèses s'effectuent directement sur les substrats dans des bâtis aux dimensions réduites. Ces modes de productions se révèlent relativement rigides et ne permettent pas de produire sur des substrats de grandes dimensions ; ils peuvent toutefois parfaitement convenir pour la production des nanoparticules d'argent utilisées dans les formulations d'encre selon la présente invention.

Les synthèses chimiques quant à elles possèdent de nombreux avantages. Le premier est de travailler en solution, les nanoparticules conductrices obtenues ainsi sont déjà dispersées dans un solvant ce qui en facilite le stockage et l'utilisation. Dans la plupart des cas, les nanoparticules ne sont pas fixées à un substrat en fin de synthèse ce qui amène plus de latitude dans leur utilisation. Cela ouvre la voie à l'emploi de substrats de différentes tailles et de différentes natures. Ces méthodes permettent aussi un meilleur contrôle des matières premières mises en jeu et limitent des pertes. Un bon ajustement des paramètres de synthèse conduit à un bon contrôle de la synthèse et la cinétique de croissance des nanoparticules conductrices. Ceci permet de garantir une bonne reproductibilité entre les lots ainsi qu'un bon contrôle de la morphologie finale des nanoparticules. La capacité à produire rapidement et en grand quantité des nanoparticules par voie chimique tout en garantissant une certaine flexibilité au produit permet d'envisager une production à l'échelle industrielle. L'obtention des nanoparticules conductrices dispersées ouvre de nombreuses perspectives concernant leur customisation. Il est ainsi possible d'ajuster la nature des stabilisants présents à la surface des nanoparticules selon l'application visée. En effet, il existe différentes méthodes de dépôt en voie humide. Dans chaque cas, une attention particulière doit être portée aux propriétés physiques de l'encre telle que la tension de surface ou la viscosité. Les adjuvants employés lors de la formulation de l'encre à base de nanoparticules vont permettre de coller aux exigences de la méthode de dépôt. Mais les ligands de surface vont également impacter ces paramètres et leur choix s'avère décisif. Il est donc important d'avoir une vue d'ensemble de l'encre pour combiner tous les acteurs - nanoparticules, solvant, ligands et adjuvants- et obtenir un produit compatible avec les applications visées.

La présente invention a pour objectif de palier à un ou plusieurs inconvénients de l'art antérieur en fournissant une encre adaptée à l'impression sans contact de type jet d'encre, au slot die, spray, l'enduction (« blade coating »), à la tampographie, flexographie et/ou à la gravure et comprenant des nanoparticules d'argent à forte concentration, par exemple une dispersion stable des dites nanoparticules d'argent. Les dites encres sont caractérisées par un ensemble de propriétés améliorées parmi lesquelles nous citerons à titre illustratif :
- Une stabilité supérieure, et/ou
- Une tension de surface améliorée, et/ou
- Un meilleur recuit (homogénéité du dépôt), et/ou
- Une absence de génération de bulles/mousses lors de l'impression, et/ou
- Une excellente conductivité après séchage à température ambiante.

Bien que les encres décrites dans WO2016184979 (A1) répondent déjà à un grand nombre des exigences fixées ci-dessus, la Demanderesse est parvenue à développer des nouvelles compositions d'encre qui permettent encore d'améliorer à la fois leur performance ainsi que leur spectre d'utilisations et donc d'applications possibles.

La présente invention concerne donc une encre dont la composition comprend au moins
1. un composé « a » consistant en des nanoparticules d'argent,
2. un composé « e » consistant en un mélange de solvants, et
3. un composé « W » consistant en de l'eau,
   caractérisée en ce que
   A. le composé « a » constitue au moins 10% en poids de la composition d'encre,
   B. le composé « e » constitue au moins 55% en poids, de préférence au moins 60% en poids de la composition d'encre et consiste en
      B.1. au moins un alcool monohydrique aliphatique, et
      B.2. au moins un alcool terpénique, et
      B.3. au moins un polyol et/ou un dérivé de polyol, et
   C. le composé « W » constitue au moins 2,5% en poids de la composition d'encre, et
   D. la somme des composés « a », « e », et « W » constitue au moins 80% en poids de la composition d'encre.

La viscosité mesurée à 20 degrés C de l'encre selon la présente invention est généralement comprise entre 2 et 2 000 mPa.s, de préférence comprise entre 5 et 1 000 mPa.s, par exemple entre 5 et 50 mPa.s, par exemple entre 5 et 25 mPa.s.

La Demanderesse a découvert que la composition d'encre à base de nanoparticules d'argent selon la présente invention avec la combinaison des composés revendiqués et de leur concentration respective permettait l'obtention d'une encre aux propriétés améliorées, en particulier une stabilité améliorée, une excellente jetabilité, ainsi qu'une conductivité améliorée dans une gamme de viscosités particulièrement adaptées pour des utilisations dans les domaines de l'impression sans contact (jet d'encre) ainsi que du slot die, spray, l'enduction (« blade coating »), de la tampographie, la flexographie et/ou de la gravure ; en particulier, les formulations d'encre à base de nanoparticules d'argent selon la présente invention présentent un ensemble de propriétés améliorées parmi lesquelles nous citerons à titre illustratif :
- Une stabilité supérieure, et/ou
- Une tension de surface améliorée, et/ou
- Un meilleur recuit (homogénéité du dépôt), et/ou
- Une absence de génération de bulles/mousses lors de l'impression, et/ou
- Une excellente conductivité après séchage à température ambiante.

Ces propriétés améliorées et, en particulier, cette stabilité supérieure de l'encre ainsi formulée sont particulièrement inattendues en raison de la combinaison improbable des solvants sélectionnés et de l'eau ; en effet, c'est par un ajout accidentel d'eau à une combinaison particulière de solvants que la Demanderesse a pu observer cette stabilité améliorée et ainsi d'entrevoir les prémices de la présente invention.

Les encres à base de nanoparticules conductrices selon la présente invention peuvent être imprimées sur tous types de supports. On citera à titre d'exemple les supports suivants : polymères et dérivés de polymères, matériaux composites, matériaux organiques, matériaux inorganiques. Le fait que l'encre selon la présente invention puisse être utilisée à température ambiante permet également d'élargir son champ d'utilisation en matière de support utilisable. Nous citerons à titre illustratif
- l'impression sur matière plastique (Tg < 60°C), par exemple le PET, le PVC (par exemple, les films alimentaires), et/ou le Polystyrène,
- l'impression sur papier couché ou non,
- l'impression sur substrat biologique (par exemple des tissus organiques, et/ou végétaux),
- la réalisation de biocapteurs, et/ou
- l'impression sur des pièces encombrantes (par exemple des murs, des pièces plastiques de taille importante, etc.).

Le composé « a » selon la présente invention consiste donc en des nanoparticules d'argent.

Selon une variante de réalisation de la présente invention, les objectifs de la présente invention sont particulièrement bien atteints lorsque le composé « a » est constitué de nanoparticules d'argent dont les dimensions sont comprises entre 1 et 250 nm. La taille des nanoparticules est définie comme étant le diamètre moyen des particules contenant de l'argent, à l'exclusion des stabilisants, tel que déterminé par exemple par microscopie électronique par transmission.

Selon une variante de réalisation de la présente invention, les nanoparticules d'argent sont de forme sphéroïdale et/ou sphérique. Pour la présente invention et les revendications qui suivent, le terme « de forme sphéroïdale » signifie que la forme ressemble à celle d'une sphère mais elle n'est pas parfaitement ronde (« quasi-sphérique »), par exemple une forme ellipsoïdale. La forme des nanoparticules est généralement identifiée au moyen de photographies prises par microscope. Ainsi, selon cette variante de réalisation de la présente invention, les nanoparticules ont des diamètres compris entre 1 et 250 nm.

Selon une variante de réalisation de la présente invention, les nanoparticules d'argent sont de forme de billes (de 1 à 250 nm), de bâtonnets (L < 200 à 300 nm), de fils (quelques centaines de nanomètres voire quelques microns), des cubes, de plaquettes ou des cristaux lorsqu'ils n'ont pas de forme prédéfinie.

Selon un mode d'exécution particulier de la présente invention, les nanoparticules d'argent ont été préalablement synthétisées par synthèse physique ou synthèse chimique. Toute synthèse physique ou chimique peut être utilisée dans le cadre de la présente invention. Dans un mode d'exécution particulier selon la présente invention les nanoparticules d'argent sont obtenues par une synthèse chimique qui utilise comme précurseur d'argent un sel d'argent organique ou inorganique. A titre d'exemple non limitatif, on citera l'acétate d'argent, le nitrate d'argent, le carbonate d'argent, le phosphate d'argent, le trifluorate d'argent, le chlorure d'argent, le perchlorate d'argent, seuls ou en mélange. Selon une variante de la présente invention, le précurseur est de l'acétate d'argent.

Ainsi, les nanoparticules qui sont utilisées préférentiellement dans la présente invention sont caractérisées par des valeurs de D50 qui sont préférentiellement comprises entre 1 et 250 nm quel que soit leur mode de synthèse (physique ou chimique); elles sont également de préférence caractérisées par une distribution monodisperse (homogène) sans agrégat. Des valeurs de D50 comprises entre 10 et 150 nm pour des nanoparticules d'argent sphéroïdales peuvent également être avantageusement utilisées.

Le composé « W » qui constitue au moins 2,5% en poids de la composition d'encre selon la présente invention consiste donc en de l'eau. En particulier, la teneur en eau dans la composition d'encre selon la présente invention est d'au moins 3% en poids, par exemple d'au moins 4% en poids ; elle est de préférence inférieure à 15% en poids, par exemple inférieure à 10% en poids.

Le composé « e » qui constitue au moins 55%, de préférence au moins 60% en poids, de la composition d'encre selon la présente invention consiste donc en un mélange de solvants qui consiste en
- B.1. au moins un alcool monohydrique aliphatique, et
- B.2. au moins un alcool terpénique, et
- B.3. au moins un polyol et/ou un dérivé de polyol.

En particulier, la teneur en alcool monohydrique aliphatique dans la composition d'encre selon la présente invention est d'au moins 5% en poids, par exemple d'au moins 10% en poids ; elle est de préférence inférieure à 25% en poids, par exemple inférieure à 20% en poids.

En particulier, la teneur en alcool terpénique dans la composition d'encre selon la présente invention est d'au moins 10% en poids, par exemple d'au moins 15% en poids ; elle est de préférence inférieure à 35% en poids, par exemple inférieure à 30% en poids.

En particulier, la teneur en polyol et dérivé de polyol dans la composition d'encre selon la présente invention est d'au moins 20% en poids, par exemple d'au moins 30% en poids ; elle est de préférence inférieure à 50% en poids, par exemple inférieure à 45% en poids.

L'alcool monohydrique aliphatique est de préférence sélectionné parmi le groupe constitué des éthanol, propanol, butanol, pentanol et hexanol ainsi que de leurs isomères (par exemple l'isopropanol, le n-butanol, le tert-butanol), et/ou un mélange de deux ou plusieurs des dits alcools monohydriques aliphatiques.

L'alcool terpénique est de préférence sélectionné parmi les menthol, nérol, cineol, lavandulol, myrcénol, terpinéol (alpha-, beta-, gamma-terpinéol, et/ou terpinén-4-ol ; de préférence, l'alpha-terpinéol), isobornéol, citronellol, linalol, bomeol, géraniol, et/ou un mélange de deux ou plusieurs des dits alcools ; un mélange d'alpha-terpinéol et de gamma-terpinéol s'est avéré particulièrement approprié.

Le polyol et/ou dérivé de polyol est de préférence caractérisé par un point d'ébullition inférieur à 260°C. On citera à titre d'exemples les glycols (par exemple les ethylène glycol, propylène glycol, diethylène glycol, triméthylène glycol, 1,3-Butylène glycol, 1,2-Butylène glycol, 2,3-Butylène glycol, Pentaméthylene glycol, hexylène glycol,.....), et/ou les éthers de glycols (par exemple les mono- ou di-éthers de glycols parmi lesquels nous citerons à titre d'exemple les éthylène glycol propyl éther, éthylène glycol butyle éther, éthylène glycol phényl éther, propylène glycol phényl éther di éthylène glycol méthyl éther, di éthylène glycol éthyle éther, di éthylène glycol propyl éther, di éthylène glycol butyle éther, propylène glycol méthyle éther, propylène glycol butyle éther, propylène glycol propyl éther, éthylène glycol di-méthyl éther, éthylène glycol di-éthyle éther, éthylène glycol di-butyle éther, glymes, éther di éthylique de di éthylène-glycol, éther di éthylique de di butylène-glycol, diglymes, éthyle diglyme, butyle diglyme), et/ou les acétates d'éther de glycols (par exemple, les acétate de 2-Butoxyéthyle, di éthylène glycol monoethyl éther acétate, di éthylène glycol butylether acétate, propylène glycol méthyle éther acétate), et/ou un mélange de deux ou plusieurs des dits solvants précités. Dans un mode d'exécution préféré selon la présente invention, l'encre comprend au moins deux polyol et/ou dérivé de polyol, de préférence au moins deux éthers de glycol. Le 2-(2-(2-Méthoxyéthoxy)éthoxy)éthanol, aussi connu sous l'abréviation TEGME, et le 2-(2-Butoxyethoxy)ethan-1-ol, aussi connu sous le nom butyl carbitol, sont deux éthers de glycol particulièrement adaptés aux formulations selon la présente invention.

Selon une variante de réalisation de la présente invention, la composition d'encre comprend également au moins un promoteur d'adhésion consistant en un composé « p » dont la concentration sera de préférence supérieure à 0,01% en poids, par exemple comprise entre 0,1 et 5 % en poids. Nous citerons à titre d'exemple de promoteur d'adhésion des polymères acryliques, silanes, siloxanes, et/ou polysiloxanes, dont l'objectif est d'améliorer la tenue à différents types de stress mécanique, par exemple l'adhérence sur de nombreux substrats. A titre d'illustration des substrats particulièrement appropriés pour les encres revendiquées, nous citerons les suivants : polyimide, polycarbonate, poly(téréphtalate d'éthylène) (PET), polyéthylène naphthalate (PEN), polyaryléthercétone, polyester, polyester thermostabilisé, verre, verre ITO, verre AZO, verre SiN.

Selon une variante de réalisation de la présente invention, la composition d'encre comprend également au moins un agent modificateur de rhéologie consistant en un composé « f », un composé « g », ou un mélange des deux, dont la concentration totale dans l'encre sera de préférence supérieure à 0,01% en poids, par exemple comprise entre 0,1 et 5 % en poids.

Le composé « f » selon la présente invention consiste en un agent modificateur de rhéologie sélectionné par exemple parmi les agents modificateurs de rhéologie de type urée. Il est de préférence sélectionné parmi les urées modifiées, de préférence les polyurées, et/ou leurs mélanges.

Le composé « g » selon la présente invention consiste en un agent modificateur de rhéologie sélectionné par exemple parmi les agents modificateur de rhéologie de type cellulosique. On citera à titre d'exemple les alkyle-cellulose, les nanocellulose, de préférence l'éthylcellulose, les nitro-celluloses et/ou leurs mélanges.

Un exemple particulier de préparation de l'encre selon la présente invention est décrit à titre illustratif ci-après :
Dans un réacteur on prépare un mélange de tous les solvants alcools + eau sous agitation mécanique. On ajoute ensuite de manière optionnelle le promoteur d'adhésion et/ou l'agent modificateur de rhéologie. On ajoute ensuite les nanoparticules d'argent dans ce mélange et on poursuit l'agitation pendant 3 heures. On effectue ensuite une ultrasonication durant 15 minutes.

Un avantage additionnel de l'encre selon la présente invention réside dans le fait que sa préparation peut être effectuée à des conditions de pression et/ou de température non contraignantes, par exemple à des conditions de pression et/ou de température proches ou identiques aux conditions normales ou ambiantes. Il est préférable de rester à moins de 40% des conditions normales ou ambiantes de pression et/ou de température. Par exemple, la Demanderesse a constaté qu'il était préférable de maintenir les conditions de pression et/ou de température durant la préparation de l'encre à des valeurs oscillant au maximum de 30%, de préférence de 15% autour des valeurs des conditions normales ou ambiantes. Un contrôle de ces conditions de pression et/ou de température peut donc être avantageusement inclus dans le dispositif de préparation de l'encre de manière à remplir ces conditions. Cet avantage lié à une préparation de l'encre dans des conditions non contraignantes se traduit bien évidemment également par une utilisation facilitée des dites encres.

Selon un mode d'exécution particulier de la présente invention, les encres formulées selon la présente invention contiennent une teneur inférieure à 40% en poids de nanoparticules d'argent (composé « a »), de préférence entre 12,5% et 30%, et plus particulièrement entre 15% et 25% en poids.

Selon un mode d'exécution de la présente invention, l'encre d'argent comprend
- un composé « a » (nanoparticules d'argent) dans une teneur comprise entre 15% et 25% en poids,
- un composé « e » (alcool monohydrique aliphatique, alcool terpénique, et polyol et/ou dérivé de polyol) dans une teneur comprise entre 60% et 80% en poids,
- un composé « W » (eau) dans une teneur comprise entre 4% et 10% en poids, et
- un composé « p » (promoteur d'adhésion) dans une teneur comprise entre 0,1 et 5 % en poids.

Ainsi, selon la présente invention, la somme des composés « a », « e », et « W » constitue au moins 80% en poids de la composition d'encre. Selon une variante particulière de la présente invention, la somme des composés « a », « e », « f », « g », « W » et « p ») constitueront de préférence au moins 85% en poids, de préférence au moins 90% en poids, par exemple au moins 95% en poids, au moins 98% en poids, au moins 99% en poids, ou même 100% en poids de l'encre finale.

Selon un mode d'exécution de la présente invention, comme l'encre intègre de l'eau en concentration contrôlée dans sa composition, une plus grande flexibilité est autorisée sur la sélection des solvants « e » choisis. En effet, les composants de l'encre revendiquée peuvent à présent comprendre de l'eau sans que cela ne perturbe la stabilité de l'encre ainsi préparée ; ainsi, il n'est plus nécessaire de sélectionner des solvants à haut degré de pureté, ce qui représente un avantage additionnel des encres selon la présente invention.

Selon un mode d'exécution de la présente invention, l'encre d'argent peut également comprendre de manière optionnelle un composé « h » consistant en un agent antioxydant. On citera à titre d'exemple les
- acide ascorbique ou vitamine C (E300), ascorbates de sodium (E301), de calcium (E302), acide diacétyl 5-6-1-ascorbique (E303), acide palmityl 6-1-ascorbique (E304) ;
- acide citrique (E330), citrates de sodium (E331), de potassium (E332) et de calcium (E333) ;
- acide tartrique (E334), tartrates de sodium (E335), potassium (E336) et de sodium et de potassium (E337) ;
- butylhydroxyanisol (E320) et butylhydroxytoluol (E321) ;
- gallates d'octyle (E311) ou de dodécyle (E312) ;
- lactates de sodium (E325), de potassium (E326) ou de calcium (E327) ;
- lécithines (E322) ;
- tocophérols naturels (E306), α-tocophérol de synthèse (E307), γ-tocophérol de synthèse (E308) et δ-tocophérol de synthèse (E309), l'ensemble des tocophérols constituant la vitamine E ;
- eugénol, thymol et/ou cinnamaldéhyde,
- ainsi qu'un mélange de deux ou plusieurs des dits antioxydants.

Bien que ceci ne constitue pas de mode d'exécution préféré selon la présente invention, les compositions d'encres peuvent également tolérer la présence de composés additionnels parmi lesquels nous citerons à titre illustratif
- des solvants. Par exemple des hydrocarbures ; des alcanes ayant de 5 à 20 atomes de carbone dont on citera à titre illustratif les Pentane (C5H12), Hexane (C6H14), Heptane (C7H16), Octane (C8H18), Nonane (C9H20), Décane (C10H22), Undécane (C11H24), Dodécane (C12H26), Tridécane (C13H28), Tétradécane (C14H30), Pentadécane (C15H32), Cétane (C16H34), Heptadécane (C17H36), Octadécane (C18H38), Nonadécane (C19H40), Eicosane (C20H42), cyclopentane (C5H10), cyclohexane (C6H12), méthylcyclohexane (C7H14), cycloheptane (C7H14), cyclooctane (C8H16) (de préférence lorsqu'il n'est pas utilisé comme composé « b »), cyclononane (C9H18), cyclodécane (C10H20) ; des hydrocarbures aromatiques ayant de 7 à 18 atomes de carbone dont on citera à titre illustratif les toluène, xylène, éthylbenzène, éthyltoluène ; et leurs mélanges ;
- des agents dispersants, par exemple des agents dispersants organiques qui comprennent au moins un atome de carbone. Ces agents dispersants organiques peuvent aussi comprendre un ou plusieurs hétéroatomes non métalliques tels qu'un composé halogéné, l'azote, l'oxygène, le soufre, le silicium. On citera à titre illustratif les thiols et leurs dérivés, les amines et leurs dérivés (par exemple les amino alcools et les éthers d'amino alcools), les acides carboxyliques et leurs dérivés carboxylates, et/ou leurs mélanges.

Selon un mode d'exécution de la présente invention, l'encre peut avantageusement être utilisée en impression sans contact jet d'encre.

Il est donc évident pour l'homme de l'art que la présente invention permet des modes de réalisation sous de nombreuses autres formes spécifiques sans pour autant s'éloigner du domaine d'application de l'invention tel que revendiqué. Par conséquent, les présents modes de réalisation doivent être considérés à titre d'illustration mais peuvent être modifiés dans le domaine défini par la portée des revendications jointes.

La présente invention et ses avantages seront à présent illustrés au moyen des formulations reprises dans les tableaux ci-dessous. Les formulations d'encres ont été préparées conformément aux modes d'exécution décrits ci-dessus dans la description. Les composés chimiques utilisés et les propriétés sont indiqués dans le tableau. F13 est une formulation conforme à la présente invention alors que CF4 est une formulation non conforme (absence de terpinéol et d'eau) donnée à titre de comparaison.

**[Tableaux 1]**

| % en poids de l'encre | Ag | Butyl Carbitol | Terpinéol | TEGME | 1-Butanol | Eau | Edaplan |
|---|---|---|---|---|---|---|---|
| Réf. F3 | 20.0 | 3.26 | 25.25 | 33.47 | 12.90 | 5.0 | 0.12 |

**[Tableaux 2]**

| % en poids de l'encre | %Ag | %Butyl Carbitol | °/ 1-Butanol | %Hexylène Glycol | %Dowanol PNB |
|---|---|---|---|---|---|
| Réf. CF4 | 20 | 3.26 | 4.90 | 38.37 | 33.47 |

Les nanoparticules d'argent (Ag) sont sphéroïdales et ont un D50 de 50 nm.

L'Edaplan est l'Edaplan^{®} LA 413 de la société Munzing Chemie GmbH ; il s'agit d'un polysiloxane organique modifié.

Le TEGME est le 2-(2-(2-Méthoxyéthoxy)éthoxy)éthanol.

Le butyl carbitol est le 2-(2-Butoxyéthoxy)éthan-1-ol.

**[Tableaux 3]**

| Référence | Viscosité (mPa.s) | Tension de surface (mN/m) | %Ag en poids | Résistance carrée (mOhm/sq) |
|---|---|---|---|---|
| Réf. F3 | 12 | 28 | 20 | 250 |

La résistance carrée de l'encre telle que mentionnée dans la présente invention pourra être mesurée selon toute méthode appropriée. A titre d'exemple correspondant aux mesures reprises dans le tableau, elle peut être avantageusement mesurée selon la méthode suivante : Une encre déposée par spincoater sur un substrat (600 tours minute / 3 min - par exemple du verre), est soumise à un recuit à l'aide d'une plaque chauffante ou d'un four (150°C). Une analyse de la résistance carrée est réalisée dans les conditions suivantes :
- Référence de l'appareil : S302 Resistivity Stand
- Référence tête 4 pointes : SP4-40045TFY
- Référence source de courant : Agilent U8001A
- Référence multimètre : Agilent U3400
- Température de mesure : température ambiante
- Coefficient conversion tension/résistance : 4.5324

La teneur en nanoparticules d'argent telle que mentionnée dans la présente invention pourra être mesurée selon toute mesure appropriée. A titre d'exemple correspondant aux mesures reprises dans le tableau, elle peut être avantageusement mesurée selon la méthode suivante :
- Analyse thermogravimétrique
- Appareil : TGA Q50 de TA Instrument
- Creuset : Alumine
- Méthode : rampe
- Plage de mesure : de température ambiante à 600°C
- Montée en température : 20°C/min

La viscosité de l'encre telle que mentionnée dans la présente invention pourra être mesurée selon toute méthode appropriée. A titre d'exemple, elle peut être avantageusement mesurée selon la méthode suivante :
- Appareil : Rhéomètre AR-G2 de TA Instrument
- Temps de conditionnement : Pré-cisaillement à 40 s⁻¹ pendant 1 minute / équilibration pendant 1 minute
- Type de test : Paliers de cisaillement
- Paliers: 40 s⁻¹, 100 s⁻¹ et 1000 s⁻¹
- Durée d'un palier : 5 minutes
- Mode : linéaire
- Mesure : toutes les 10 secondes
- Température : 20°C
- Méthode de retraitement de la courbe : Newtonien
- Zone retraitée : toute la courbe

La tension de surface telle que mentionnée dans la présente invention pourra être mesurée selon toute méthode appropriée. A titre d'exemple, elle peut être avantageusement mesurée selon la méthode suivante :
- Appareil : OCA 15 d'Apollo Instrument
- Méthode :
- Pendant drop (left)
- Volume de mesure : 0.2 µL
- Débit : 0.5 µL/s
- Aiguille 1.65 mm
- Rentrer la densité de l'encre : 1.1675
- Mesure : Volume encre : 1 mL d'encre / Nombre de mesures = 4.

Les impressions jet d'encre ont été réalisées avec une imprimante KSCAN de Kelenn Technology.
- Résolution : 600 x 1200 dpi
- Substrat : Folex CF-T1/PD
- Nombre de couches : 1

Les compositions d'encre selon une variante de la présente invention sont caractérisées en ce que leur valeur de propriété de résistance carrée est inférieure à 350 mohms/sq pour des épaisseurs inférieures ou égales à 300 nm (température de recuit de 150°C).

Une comparaison des impressions effectuées avec les 2 formulations ci-dessus représente un bon exemple de visualisation des avantages apportés par la présente invention ; on observe en effet une nette amélioration de la résolution de l'impression de la formulation F3 par rapport à celle de CF4.

## Revendications

1. Composition d'encre comprenant
1. un composé « a » consistant en des nanoparticules d'argent,
2. un composé « e » consistant en un mélange de solvants, et
3. un composé « W » consistant en de l'eau,
**caractérisée en ce que**
A. le composé « a » constitue au moins 10% en poids de la composition d'encre,
B. le composé « e » constitue au moins 55% en poids de la composition d'encre et consiste en
B.1. au moins un alcool monohydrique aliphatique, et
B.2. au moins un alcool terpénique, et
B.3. au moins un polyol et/ou un dérivé de polyol, et
C. le composé « W » constitue au moins 2,5% en poids de la composition d'encre, et
D. la somme des composés « a », « e », et « W » constitue au moins 80% en poids de la composition d'encre.

2. Composition d'encre selon la revendication 1 dans laquelle la concentration en eau est d'au moins 4% en poids et est inférieure à 10% en poids.

3. Composition d'encre selon l'une quelconque des revendications précédentes dans laquelle la concentration en nanoparticules d'argent est comprise entre 15% et 25% en poids.

4. Composition d'encre selon l'une quelconque des revendications précédentes dans laquelle la concentration en alcool monohydrique aliphatique est d'au moins 10% en poids et est inférieure à 20% en poids.

5. Composition d'encre selon l'une quelconque des revendications précédentes dans laquelle la concentration en alcool terpénique est d'au moins 15% en poids et est inférieure à 30% en poids.

6. Composition d'encre selon l'une quelconque des revendications précédentes dans laquelle la concentration en polyol et dérivé de polyol est d'au moins 30% en poids et est inférieure à 45% en poids.

7. Composition d'encre selon l'une quelconque des revendications précédentes dans laquelle l'alcool monohydrique aliphatique est sélectionné parmi le groupe constitué des éthanol, propanol, butanol, pentanol et hexanol ainsi que de leurs isomères (par exemple l'isopropanol, le n-butanol, le tert-butanol), et/ou un mélange de deux ou plusieurs des dits alcools monohydriques aliphatiques précités.

8. Composition d'encre selon l'une quelconque des revendications précédentes dans laquelle l'alcool terpénique est sélectionné parmi les menthol, nérol, cineol, lavandulol, myrcénol, terpinéol (alpha-, beta-, gamma-terpinéol, et/ou terpinén-4-ol ; de préférence, l'alpha-terpinéol), isobornéol, citronellol, linalol, borneol, géraniol, et/ou un mélange de deux ou plusieurs des dits alcools précités.

9. Composition d'encre selon l'une quelconque des revendications précédentes dans laquelle le polyol et/ou dérivé de polyol possède un point d'ébullition inférieur à 260°C.

10. Composition d'encre selon l'une quelconque des revendications précédentes dans laquelle le polyol est un glycol et le dérivé de polyol est un éther de glycol.

11. Composition d'encre selon l'une quelconque des revendications précédentes dans laquelle le polyol est absent et le dérivé de polyol consiste en un mélange d'éthers de glycol, par exemple un mélange de 2-(2-(2-Méthoxyéthoxy)éthoxy)éthanol et de 2-(2-Butoxyethoxy)ethan-1-ol.

12. Composition d'encre selon l'une quelconque des revendications précédentes comprenant un composé « p » consistant en un promoteur d'adhésion sélectionné parmi les polymères acryliques, silanes, siloxanes, et/ou polysiloxanes et dont la concentration est comprise entre 0,1 et 5 % en poids.

13. Composition d'encre selon l'une quelconque des revendications précédentes ayant une viscosité mesurée à 20 degrés C comprise entre 5 et 25 mPa.s.

14. Composition d'encre selon l'une quelconque des revendications précédentes **caractérisée en ce que** les nanoparticules d'argent (composé « a ») sont sphéroïdales et ont des valeurs de D50 comprises entre 10 et 150 nm.

15. Utilisation d'une encre selon l'une quelconque des revendications précédentes en impression sans contact par jet d'encre.

## Patentansprüche

1. Tintenzusammensetzung, umfassend
1. eine Verbindung "a", die aus Silbernanopartikeln besteht,
2. eine Verbindung "e", die aus einer Mischung aus Lösungsmitteln besteht, und
3. eine Verbindung "W", die aus Wasser besteht,
**dadurch gekennzeichnet, dass**
A. Verbindung "a" zumindest 10 Gew.-% der Tintenzusammensetzung ausmacht,
B. Verbindung "e" zumindest 55 Gew.-% der Tintenzusammensetzung ausmacht und aus Folgendem besteht:
B.1. zumindest einem aliphatischen monohydrischen Alkohol, und
B.2. zumindest einem terpenischen Alkohol, und
B.3. zumindest einem Polyol und/oder einem Polyolderivat, und
C. Verbindung "W" zumindest 2,5 Gew.-% der Tintenzusammensetzung ausmacht, und
D. die Summe der Verbindungen "a", "e" und "W" zumindest 80 Gew.-% der Tintenzusammensetzung ausmacht.

2. Tintenzusammensetzung nach Anspruch 1, in der die Wasserkonzentration zumindest 4 Gew.-% ist und weniger als 10 Gew.-% ist.

3. Tintenzusammensetzung nach einem der vorhergehenden Ansprüche, in der die Konzentration an Silbernanopartikeln zwischen 15 Gew.-% und 25 Gew.-% ist.

4. Tintenzusammensetzung nach einem der vorhergehenden Ansprüche, in der die Konzentration an aliphatischem monohydrischem Alkohol zumindest 10 Gew.-% ist und weniger als 20 Gew.-% ist.

5. Tintenzusammensetzung nach einem der vorhergehenden Ansprüche, in der die Konzentration an terpenischem Alkohol zumindest 15 Gew.-% ist und weniger als 30 Gew.-% ist.

6. Tintenzusammensetzung nach einem der vorhergehenden Ansprüche, in der die Konzentration an Polyol und Polyolderivat zumindest 30 Gew.-% ist und weniger als 45 Gew.-% ist.

7. Tintenzusammensetzung nach einem der vorhergehenden Ansprüche, in welcher der aliphatische monohydrische Alkohol ausgewählt ist aus der Gruppe bestehend aus Ethanol, Propanol, Butanol, Pentanol und Hexanol und auch Isomeren davon (zum Beispiel Isopropanol, n-Butanol, tert-Butanol) und/oder einer Mischung aus zwei oder mehr der oben genannten aliphatischen monohydrischen Alkohole.

8. Tintenzusammensetzung nach einem der vorhergehenden Ansprüche, in welcher der terpenische Alkohol ausgewählt ist aus Menthol, Nerol, Cineol, Lavandulol, Myrcenol, Terpineol (alpha-, beta-, gamma-Terpineol und/oder Terpinen-4-ol; bevorzugt alpha-Terpineol), Isoborneol, Citronellol, Linalool, Borneol, Geraniol und/oder einer Mischung aus zwei oder mehr der oben genannten Alkohole.

9. Tintenzusammensetzung nach einem der vorhergehenden Ansprüche, in der das Polyol und/oder Polyolderivat einen Siedepunkt von weniger als 260 °C aufweist.

10. Tintenzusammensetzung nach einem der vorhergehenden Ansprüche, in der das Polyol ein Glycol ist und das Polyolderivat ein Glycolether ist.

11. Tintenzusammensetzung nach einem der vorhergehenden Ansprüche, in der das Polyol fehlt und das Polyolderivat aus einer Mischung aus Glycolethern besteht, zum Beispiel einer Mischung aus 2-(2-(2-Methoxyethoxy)ethoxy)ethanol und 2-(2-Butoxyethoxy)ethan-1-ol.

12. Tintenzusammensetzung nach einem der vorhergehenden Ansprüche, umfassend eine Verbindung "p" bestehend aus einem Haftförderer, der ausgewählt ist aus Acrylpolymeren, Silanen, Siloxanen und/oder Polysiloxanen, und deren Konzentration zwischen 0,1 Gew.-% und 5 Gew.-% ist.

13. Tintenzusammensetzung nach einem der vorhergehenden Ansprüche, aufweisend eine Viskosität gemessen bei 20 °C zwischen 5 und 25 mPa.s.

14. Tintenzusammensetzung nach einem der vorhergehenden Ansprüche, **dadurch gekennzeichnet, dass** die Silbernanopartikel (Verbindung "a") kugelförmig sind und D50-Werte zwischen 10 und 150 nm aufweisen.

15. Verwendung einer Tinte nach einem der vorhergehenden Ansprüche beim kontaktlosen Tintenstrahldrucken.

## Claims

1. Ink composition comprising
1. one compound "a" consisting of silver nanoparticles,
2. one compound "e" consisting of a mixture of solvents, and
3. one compound "W" consisting of water,
**characterized in that**
A. compound "a" constitutes at least 10% by weight of the ink composition,
B. compound "e" constitutes at least 55% by weight of the ink composition and consists of
B.1. at least one aliphatic monohydric alcohol, and
B.2. at least one terpenic alcohol, and
B.3. at least one polyol and/or one polyol derivative, and
C. compound "W" constitutes at least 2.5% by weight of the ink composition, and
D. the sum of compounds "a", "e" and "W" constitutes at least 80% by weight of the ink composition.

2. Ink composition according to Claim 1, in which the water concentration is at least 4% by weight and is less than 10% by weight.

3. Ink composition according to either of the preceding claims, in which the concentration of silver nanoparticles is between 15% and 25% by weight.

4. Ink composition according to any one of the preceding claims, in which the concentration of aliphatic monohydric alcohol is at least 10% by weight and is less than 20% by weight.

5. Ink composition according to any one of the preceding claims, in which the concentration of terpenic alcohol is at least 15% by weight and is less than 30% by weight.

6. Ink composition according to any one of the preceding claims, in which the concentration of polyol and polyol derivative is at least 30% by weight and is less than 45% by weight.

7. Ink composition according to any one of the preceding claims, in which the aliphatic monohydric alcohol is selected from the group consisting of ethanol, propanol, butanol, pentanol and hexanol and also isomers thereof (for example isopropanol, n-butanol, tert-butanol), and/or a mixture of two or more of said abovementioned aliphatic monohydric alcohols.

8. Ink composition according to any one of the preceding claims, in which the terpenic alcohol is selected from menthol, nerol, cineol, lavandulol, myrcenol, terpineol (alpha-, beta-, gamma-terpineol, and/or terpinen-4-ol; preferably alpha-terpineol), isoborneol, citronellol, linalool, borneol, geraniol, and/or a mixture of two or more of said abovementioned alcohols.

9. Ink composition according to any one of the preceding claims, in which the polyol and/or polyol derivative has a boiling point of less than 260°C.

10. Ink composition according to any one of the preceding claims, in which the polyol is a glycol and the polyol derivative is a glycol ether.

11. Ink composition according to any one of the preceding claims, in which the polyol is absent and the polyol derivative consists of a mixture of glycol ethers, for example a mixture of 2-(2-(2-methoxyethoxy)ethoxy)ethanol and 2-(2-butoxyethoxy)ethan-1 -ol.

12. Ink composition according to any one of the preceding claims, comprising a compound "p" consisting of an adhesion promoter selected from acrylic polymers, silanes, siloxanes and/or polysiloxanes and the concentration of which is between 0.1% and 5% by weight.

13. Ink composition according to any one of the preceding claims, having a viscosity measured at 20°C of between 5 and 25 mPa.s.

14. Ink composition according to any one of the preceding claims, **characterized in that** the silver nanoparticles (compound "a") are spheroidal and have D50 values of between 10 and 150 nm.

15. Use of an ink according to any one of the preceding claims in contactless inkjet printing.
